# EUROPEAN PATENT SPECIFICATION

(11) **EP 1 397 225 B1**
(45) Date of publication and mention of the grant of the patent: **09.02.2005**
(21) Application number: 02745550.0
(22) Date of filing: 12.06.2002
(51) Int. Cl.: B23B 47/28

(54) **SPLIT-PIN DRILL JIG**
SPLINT-BOHRVORRICHTUNG
GABARIT DE PER AGE A GOUPILLE FENDUE

(30) Priority: 21.06.2001 GB 0115195
(43) Date of publication of application: 17.03.2004
(73) Proprietor: BAE Systems PLC, London SW1Y 5AD (GB)
(72) Inventor: MASSEY, Graham, Chester CH4 0DR (GB)
(74) Representative: Edis, Ronald Malcolm
(86) International application number: PCT/GB2002/002701
(87) International publication number: WO 2003/000448

(56) References cited:
- US-A- 5 409 327

## Description

The present invention relates to manufacturing jig design and is particularly concerned with tools for enabling the drilling of holes in bolts.

A commonly-used means for preventing nuts coming loose from bolts in service is the use of split pins. Typically, a split pin is inserted between the castellations of a special castellated nut, and through a hole in the bolt, until the head of the pin fits between two castellations. The split ends of the pin are then bent over, thus retaining the pin in the hole and locking the nut onto the bolt. A potential drawback to this method of using split pins is that, when the nut is tightened on the bolt, the gaps between the castellations may not line up with the pre-drilled hole in the bolt.

To overcome this potential drawback, another method of using split pins is to assemble a nut onto a bolt, tighten it to the required specified torque, and then drill, freehand, through the bolt, using the gap between the castellations as an approximate guide. This is an awkward process in a production scenario as access for drilling is often restricted, and it is difficult for the operator to drill accurately freehand. In practice this sometimes results in broken drills or incorrectly-drilled split-pin holes. If the drill breaks off in the bolt, the rectification process to remove and replace the bolt and nut is difficult and time-consuming, and therefore expensive. An improved method of drilling split-pin holes would therefore be an advantage for production processes that require the locking of nuts using split pins.

According to the present invention there is provided a jig for drilling a split-pin hole, in a suitable position, in a bolt which has a castellated nut assembled onto it. The jig includes a housing locatable on the assembled nut and bolt and a drill bush located and aligned to allow a generally diametrical hole to be drilled in the bolt to receive the split pin.

The body of the jig may be manufactured from a bar of metallic material which is machined, or otherwise formed, internally to form a hexagonal internal hole. Alternatively the jig body may be manufactured from a standard hexagonal socket as ordinarily used for tightening and loosening nuts. In either case, the size of the hexagonal internal hole is chosen such that it fits closely over the six faces of the castellated nut. Additionally, the hexagonal hole may be differently-sized at the two ends of the bar to fit two different sizes of nut.

The jig has one radial hole through its wall, which hole may be coincident with the centre of an internal flat surface. Into the radial hole is secured a drill bush of an appropriate size to guide the drill bit required to drill the split-pin hole.

In use, the jig is placed over the nut and bolt so that the axis of the hexagonal hole in the jig is substantially coincident with the axis of the bolt. The jig is pushed down onto the nut and bolt until a Ication means, which is part of the jig, engages with the nut and locates the jig in a suitable position to enable the drilling operation to take place. This location means may be provided by at least one further radial hole through the jig wall where each hole may be coincident with the centre of a different internal flat surface. A locating pin may be inserted into each hole so that it projects a short distance into the hexagonal hole, the pins being secured in their holes by some means such as an interference fit or an adhesive. The projections of the pins into the hexagonal hole engage with the gaps between the castellations of the nut when the jig is placed over the nut. Preferably, up to four further locating pins may be provided in this way in order to locate the jig securely in relation to the nut and bolt and especially to reduce wobbling of the jig whilst the split-pin hole is being drilled.

To enable suitable location of the jig, the centres of the holes for the drill bush and locating pins may lie in the same plane, which is orthogonal to the longitudinal axis of the hexagonal hole. Furthermore, the diameter of the locating pins may be chosen such that, when the jig is placed over the castellated nut, the pins fit between the castellations of the nut so that the jig is located in a suitably secure manner.

An embodiment of the present invention will now be described with reference to the accompanying drawings in which:
Figure 1 shows a bolt and castellated nut assembly.
Figure 2 shows a pictorial view of a split-pin drill jig.
Figure 3 shows a section through Figure 2 where the drill bush and locating pins are inserted.

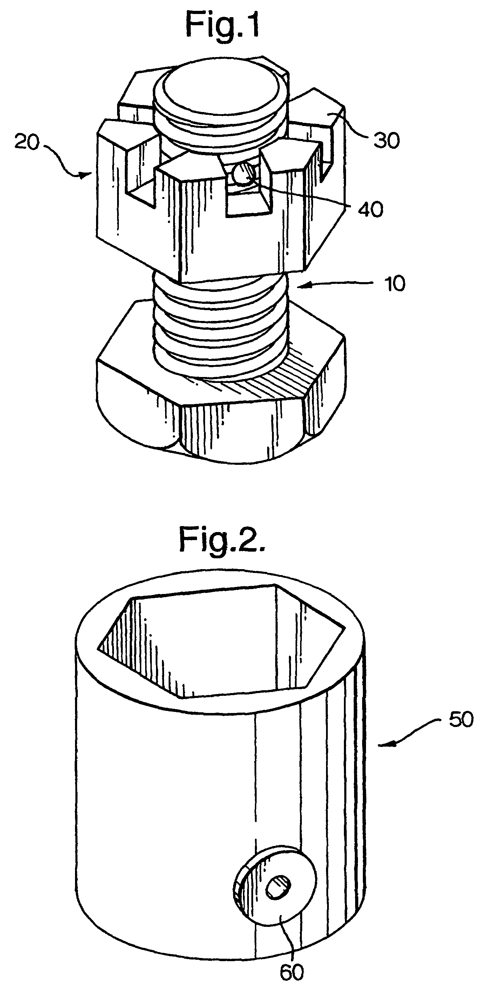

Referring first to Figure 1, there is shown a bolt 10 and a castellated nut 20. As shown, there are six castellations 30 on a typical castellated nut. The hole 40 through the bolt 10 is shown in the correct position ready for the insertion of a split pin to lock the nut in place on the bolt According to the prior art, the hole 40 was drilled, freehand, diametrically through the bolt 10 from one side to the other with the nut 20 in situ on the bolt 10.

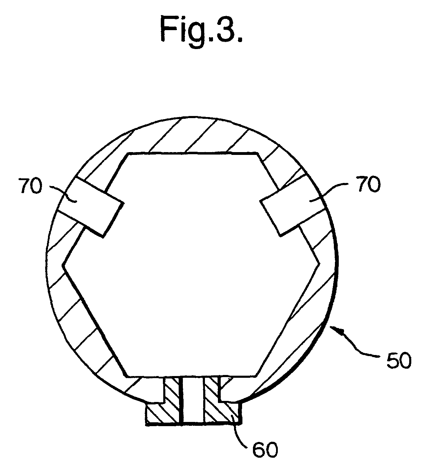

Figures 2 and 3 show the drill jig 50 with drill bush 60 and locating pins 70. When the drill jig 50 is placed over the nut 20, the locating pins 70 engage in the gaps between the castellations 30. This locates the drill jig 50 on the nut 20 so that a drill inserted in the drill bush 60 will drill the hole 40 in the correct location and direction.

## Claims

1. A jig (50) for drilling a generally diametrical hole (40) in a bolt (10), the bolt (10) having a castellated nut (20) assembled on the bolt (10), wherein the jig includes a housing locatable on the assembled nut (20) and bolt (10) and a drill bush (60) located and aligned to allow the hole (40) to be drilled in the bolt (10) to receive a split pin.

2. A jig (50) as claimed in Claim 1 wherein the jig body is manufactured from a hollow metal bar with a longitudinal hexagonal cut-out defined therein.

3. A jig (50) as claimed in Claim 1 wherein the jig body is manufactured from a standard hexagonal socket.

4. A jig (50) as claimed in Claim 1 that has two ends wherein the two ends are sized to co-operate with different-sized nuts.

5. A jig (50) as claimed in any preceding claim comprising means for axially locating the jig (50) on the nut (20) and bolt (10) so that the hole (40) can be drilled in the bolt (10) at a suitable location.

6. A method for drilling a generally diametrical hole (40) in a bolt (10), having a castellated nut (20) located thereon, the hole (40) being located and aligned in a suitable manner so as to receive a split pin which locks in place the nut (20), in which a drill jig (50) is placed onto the nut (20) and bolt (10) assembly and a drill bush (60), being part of the jig (50), is used to guide a drill bit so that it may drill the hole (40).

## Patentansprüche

1. Bohrvorrichtung (50) zum Bohren eines allgemein diametralen Loches (40) in einen Bolzen (10), auf den eine Kronenmutter (20) aufgeschraubt ist, wobei die Bohrvorrichtung ein Gehäuse aufweist, das auf die aufgeschraubte Mutter (20) und den Bolzen (10) aufsteckbar ist und eine Bohrbüchse (60) aufweist, die so angeordnet und ausgerichtet ist, dass das Loch (40) in den Bolzen (10) passgenau eingebohrt werden kann, um einen Splint aufzunehmen.

2. Bohrvorrichtung (50) nach Anspruch 1, bei welcher der Körper der Bohrvorrichtung aus einer hohlen Metallstange hergestellt ist, die eine in Längsrichtung verlaufende Sechskantausnehmung besitzt.

3. Bohrvorrichtung (50) nach Anspruch 1, bei welcher der Bohrkörper aus einer üblichen Sechskantfassung hergestellt ist.

4. Bohrvorrichtung (50) nach Anspruch 1, welche zwei Enden aufweist, die so bemessen sind, dass sie mit unterschiedlich großen Muttern zusammenwirken können.

5. Bohrvorrichtung (50) nach einem der vorhergehenden Ansprüche, welche Mittel zur axialen Festlegung der Bohrvorrichtung (50) auf der Mutter (20) und dem Bolzen (10) derart aufweist, dass das Loch (40) in den Bolzen (10) an einer geeigneten Stelle eingebohrt werden kann.

6. Verfahren zum Bohren eines allgemein diametralen Loches (40) in einen Bolzen (10), auf den eine Kronenmutter (20) aufgeschraubt ist, wobei das Loch (40) an einer geeigneten Stelle derart ausgerichtet ist, dass es einen Splint aufnehmen kann, der die Mutter (20) an Ort und Stelle blockiert, wobei eine Bohrvorrichtung (50) über die Mutter (20) und den Bolzen (10) gesteckt wird und eine Bohrbüchse (60), die einen Teil der Bohrvorrichtung (50) bildet, benutzt wird, um einen Bohrer derart zu führen, dass er das Loch (40) einbohren kann.

## Revendications

1. Un gabarit (50) pour percer un trou généralement diamétral (40) dans un boulon (10), le boulon (10) ayant un écrou crénelé (20) assemblé sur le boulon (10), dans lequel le gabarit comprend un logement pouvant être situé sur l'écrou (20) et le boulon (10) assemblés et un canon de perçage (60) situé et aligné pour permettre au trou (40) d'être percé dans le boulon (10) pour recevoir une goupille fendue.

2. Un gabarit (50) tel que revendiqué dans la revendication 1 dans lequel le corps de gabarit est fabriqué à partir d'une barre de métal creuse, une découpe hexagonale longitudinale étant définie dans celui-ci.

3. Un gabarit (50) tel que revendiqué dans la revendication 1 dans lequel le corps de gabarit est fabriqué à partir d'une douille hexagonale standard.

4. Un gabarit (50) tel que revendiqué dans la revendication 1 qui a deux extrémités dans lequel les deux extrémités sont dimensionnées pour coopérer avec des écrous de tailles différentes.

5. Un gabarit (50) tel que revendiqué dans n'importe quelle revendication précédente comportant des moyens pour situer le gabarit (50) de façon axiale sur l'écrou (20) et le boulon (10) de façon à ce que le trou (40) puisse être percé dans le boulon (10) à un emplacement approprié.

6. Un procédé pour percer un trou (40) généralement diamétral dans un boulon (10), ayant un écrou crénelé (20) situé sur celui-ci, le trou (40) étant situé et aligné d'une manière appropriée afin de recevoir une goupille fendue qui verrouille l'écrou (20) en place, dans lequel un gabarit de perçage (50) est placé sur l'assemblage d'écrou (20) et de boulon (10) et un canon de perçage (60), faisant partie du gabarit (50), est utilisé pour guider un foret de façon à ce qu'il puisse percer le trou (40).
